# FASCICULE DE BREVET EUROPEEN

(11) **EP 4 410 654 B1**
(45) Date de publication et mention de la délivrance du brevet: **30.04.2025**
(21) Numéro de dépôt: 24155438.5
(22) Date de dépôt: 02.02.2024
(51) Int. Cl.: B62M 6/90, B62J 43/13, B62J 43/28, B62K 19/40, B62J 11/19, B60L 50/20, B60L 50/64, B60L 50/60, B60L 53/80, H01M 10/46, H01M 50/249, H02J 7/00, B60K 1/04

(54) **UNITÉ D'ALIMENTATION ÉLECTRIQUE EMBARQUÉE POUR CYCLE**
BORDEIGENE STROMVERSORGUNGSEINHEIT FÜR EINEN FAHRRAD
ON-BOARD POWER SUPPLY UNIT FOR CYCLE

(30) Priorité: 02.02.2023 FR 2300988
(43) Date de publication de la demande: 07.08.2024
(73) Titulaire: G. Cartier Technologies, 74302 Cluses (FR)
(72) Inventeur: DAVIS, Bruce, 74300 THYEZ (FR); BREHERET, Jean-Luc, 74300 CHATILLON SUR CLUSES (FR)
(74) Mandataire: Cabinet Poncet

(56) Documents cités:
- CN-A- 109 591 947
- CN-U- 202 917 607
- CN-U- 208 576 686
- CN-U- 216 994 680
- DE-U1- 202015 003 701
- JP-A- H09 161 749
- JP-A- H11 321 748

## Description

### DOMAINE TECHNIQUE DE L'INVENTION

La présente invention concerne le domaine des alimentations électriques embarquées pour véhicules.

De telles alimentations électriques embarquées peuvent alimenter divers équipements des véhicules. Elles peuvent notamment servir à alimenter les moteurs d'assistance dans le cas de véhicules légers à assistance électrique tels que des bicyclettes, des trottinettes, des tricycles, ....

De telles alimentations électriques embarquées comprennent une batterie d'accumulateurs électriques embarquée sur le châssis du véhicule. La recharge de la batterie d'accumulateurs électriques est souvent assurée par un chargeur externe que l'utilisateur doit connecter à la batterie d'accumulateurs électriques. Le chargeur externe est soit connecté en permanence à une source extérieure d'énergie électrique, soit connectable à volonté à ladite source extérieure d'énergie électrique.

Pour charger la batterie d'accumulateurs électriques à différents points de connexion à une source extérieure d'énergie électrique, l'utilisateur doit transporter son chargeur externe dans un sac, ce qui n'est pas très confortable et fait courir un risque d'oublier ou de perdre le chargeur.

Pour éviter le désagrément de transport d'un chargeur externe dans un sac, et le risque d'oublier ou de perdre le chargeur, on a déjà proposé d'intégrer un chargeur embarqué, fixé à une extrémité de la batterie d'accumulateurs électriques, et connecté en permanence à ladite batterie d'accumulateurs électriques.

Une solution proposée est d'utiliser un câble externe de connexion électrique, que l'utilisateur doit connecter entre le chargeur embarqué et une source extérieure d'énergie électrique.

Pour charger la batterie d'accumulateurs électriques à différents points de connexion à une source extérieure d'énergie électrique, l'utilisateur doit alors transporter le câble externe de connexion électrique dans un sac, ce qui à nouveau n'est pas très confortable et fait courir un risque d'oublier ou de perdre le câble externe.

On connaît du document CN 216 994 680 U une unité d'alimentation électrique embarquée sur un véhicule terrestre. Selon ce document, une batterie d'accumulateurs électriques et un chargeur sont fixés au châssis du véhicule, une sortie du chargeur est connectée à la batterie d'accumulateurs électriques, une entrée du chargeur est raccordée en permanence à un câble de connexion électrique dont une extrémité libre est munie d'une fiche mâle. Le câble de connexion électrique comporte un premier tronçon qui sort latéralement du chargeur jusqu'à un tronçon intermédiaire enroulé en hélice et suivi d'un tronçon longitudinal terminé par la fiche. Les trois tronçons sont logés de façon lâche, non calée, dans un logement déporté latéralement à l'écart de la batterie d'accumulateurs électriques et du chargeur.

Dans le document JP H09 161749 A, une batterie d'accumulateurs électriques et un chargeur sont logés dans un boîtier commun à l'écart l'un de l'autre pour laisser libre entre eux un logement suffisamment grand pour recevoir un câble de connexion électrique dont une extrémité libre est munie d'une fiche mâle. A l'utilisation, on tire sur le câble de connexion électrique pour l'extraire du logement. Rien n'est indiqué sur la façon de le remettre en place. Il n'y a pas de réceptacle spécifique pour la fiche.

Dans le document CN 208576686 U, un cadre commun reçoit une batterie d'accumulateurs électriques, un chargeur, une unité de commande et un câble de connexion électrique à fiche mâle, pour permettre un test préalable et une insertion groupée dans un véhicule. Aucune description n'est donnée sur la connexion et la tenue du câble de connexion électrique dans le cadre commun.

On connaît du document CN 202 917 607 U une unité d'alimentation électrique embarquée pour véhicule, conforme au préambule de la revendication 1.

Dans les solutions proposées, il n'a pas été imaginé de solution simple, efficace et peu encombrante pour loger le câble externe de connexion électrique sur le châssis du véhicule.

### EXPOSE DE L'INVENTION

Un problème proposé par la présente invention est de concevoir une unité d'alimentation électrique embarquée dans laquelle un chargeur est fixé et connecté en permanence à la batterie d'accumulateurs électriques, un câble de connexion électrique est connecté en permanence au chargeur et est accessible et suffisamment long pour sa connexion à une source extérieure d'énergie électrique, et le câble de connexion électrique peut être rangé en une position de repos qui n'augmente pas de façon sensible le volume occupé par l'unité d'alimentation électrique.

En outre, l'utilisation du câble de connexion électrique, pour le mettre en position de repos ou le déployer pour sa connexion à une source extérieure d'énergie électrique, ne doit nécessiter aucune habileté ou attention particulière de l'utilisateur.

D'autre part, en position de repos, le câble de connexion électrique doit être fixé de façon efficace, pour éviter tout risque de libération même partielle ou de vibration du câble vis-à-vis de l'unité d'alimentation électrique lors du fonctionnement du véhicule.

De préférence, l'unité d'alimentation électrique embarquée doit être amovible, permettant à l'utilisateur de procéder à la recharge dans un local surveillé. Dans ce cas, la manipulation de l'unité d'alimentation électrique, pour son adaptation sur le véhicule ou son retrait, ne doit en aucun cas être affectée par la présence du câble de connexion électrique.

Selon un autre objet de l'invention, un mauvais rangement du câble de connexion électrique doit être quasiment impossible et ne doit jamais générer un risque d'endommagement du câble de connexion électrique, endommagement pouvant entraîner un risque d'électrocution de l'utilisateur.

De même, l'invention vise à éviter qu'un câble de connexion électrique endommagé puisse venir en contact avec le châssis du véhicule pendant la recharge de l'unité d'alimentation électrique.

Pour atteindre ces objets ainsi que d'autres, l'invention propose une unité d'alimentation électrique embarquée pour véhicule telle que définie par la revendication 1.

De la sorte, on profite ainsi de la longueur relativement importante de la batterie d'accumulateurs qui est nécessaire pour une autonomie satisfaisante d'alimentation des équipements du véhicule, le câble de connexion électrique étant suffisamment long pour permettre sa connexion à une source extérieure d'énergie électrique lorsque l'unité d'alimentation électrique repose sur le sol, le volume de l'unité d'alimentation électrique n'est pas sensiblement augmenté par la présence du câble de connexion électrique en position de repos, et la manipulation du câble de connexion électrique est aisée.

L'unité d'alimentation électrique de la présente invention peut en outre comporter une ou plusieurs des caractéristiques suivantes.

Ainsi, par exemple, le réceptacle de fiche peut avantageusement être conformé pour recevoir ladite fiche mâle selon une direction d'insertion transversale par rapport à ladite direction d'allongement.

Cela facilite encore la manipulation du câble de connexion électrique, sans augmenter le volume de l'unité d'alimentation électrique.

De préférence ladite fiche mâle est coudée.

Cela réduit encore l'encombrement du câble de connexion électrique et de l'unité d'alimentation électrique.

Dans ladite position de repos, le câble de connexion électrique est avantageusement tendu entre le chargeur et le réceptacle de fiche.

Cela évite les vibrations du câble de connexion électrique lors de l'utilisation du véhicule.

Selon un mode de réalisation avantageux, le réceptacle de fiche est mobile, en translation ou en rotation, selon la direction d'allongement, entre une position rapprochée et une position écartée, le réceptacle de fiche étant sollicité en permanence par un moyen de rappel qui le repousse vers sa position écartée de façon à tendre le câble de connexion électrique en position de repos.

Cela permet de garantir la tension du câble de connexion électrique en position de repos, tout en facilitant sa manipulation.

Pour réduire encore les risques de vibrations du câble de connexion électrique lors de l'utilisation du véhicule, on peut prévoir que, entre le chargeur et le réceptacle de fiche, le câble de connexion électrique est maintenu contre la batterie d'accumulateurs électriques par une pluralité de moyens de liaison point à point répartis selon la longueur du câble de connexion électrique.

Les moyens de liaison point à point peuvent avantageusement comprendre des aimants, facilitant encore la manipulation du câble de connexion électrique.

De préférence, entre le chargeur et la fiche mâle, le câble de connexion électrique est muni de réglettes de rigidification définissant au moins deux tronçons de câble à rigidité augmentée séparant des tronçons de câble dépourvus de réglette et ayant une rigidité plus réduite que celle des réglettes.

De la sorte, le câble de connexion électrique est plus solidement maintenu contre la batterie d'accumulateurs, tout en conservant une flexibilité suffisante.

Selon un mode de réalisation avantageux et simplifié, on peut prévoir que :
- le réceptacle de fiche est disposé à la seconde extrémité de la batterie d'accumulateurs électriques,
- en position de repos, le câble de connexion électrique longe ladite batterie d'accumulateurs électriques en un seul passage.

Ce mode de réalisation convient lorsque la batterie d'accumulateurs électriques est suffisamment longue, de façon que le câble de connexion électrique soit également suffisamment long pour permettre la connexion de l'unité d'alimentation électrique à une source extérieure d'énergie électrique.

Pour réduire encore le volume de l'unité d'alimentation électrique, entre le chargeur et le réceptacle de fiche, le câble de connexion électrique peut être logé dans une rainure prévue en périphérie de la batterie d'accumulateurs électriques.

Ladite rainure est de préférence sensiblement rectiligne et parallèle à ladite direction d'allongement.

Selon un mode de réalisation avantageux pour une utilisation sur un cycle, l'unité d'alimentation électrique comprend des organes de fixation amovible conformés pour sa fixation dans un logement d'un cadre de bicyclette.

Le câble de connexion électrique peut avantageusement avoir une longueur comprise entre 20 et 30 centimètres environ, avantageusement de 25 centimètres environ.

Selon une application de l'invention, on prévoit un vélo à assistance électrique comprenant une unité d'alimentation électrique telle que définie ci-dessus.

Dans ce cas, le vélo à assistance électrique peut avantageusement comprendre un compartiment de réception dans lequel l'unité d'alimentation électrique peut s'engager à faible jeu, interdisant l'engagement correct de l'unité d'alimentation électrique dans le compartiment de réception lorsque le câble de connexion électrique n'est pas positionné dans sa position de repos.

De la sorte, un mauvais rangement du câble de connexion électrique est quasiment impossible et ne peut pas générer un risque d'endommagement du câble de connexion électrique. En outre, on évite ainsi qu'un câble de connexion électrique éventuellement endommagé par des causes extérieures puisse venir en contact avec le châssis du véhicule pendant la recharge de l'unité d'alimentation électrique.

Selon une disposition avantageuse dans un tel vélo à assistance électrique, on prévoit que :
- le compartiment de réception est ménagé dans une poutre oblique du cadre de vélo entre le guidon et le pédalier,
- le compartiment de réception comprend une ouverture supérieure obturable par un couvercle et autorisant l'insertion et l'extraction de l'unité d'alimentation électrique,
- dans le compartiment de réception, l'unité d'alimentation électrique est disposée avec sa direction d'allongement sensiblement alignée avec la poutre oblique, avec le réceptacle de fiche en partie haute du compartiment de réception, et avec le câble de connexion électrique en position de repos situé en dessous de la batterie d'accumulateurs électriques.

De la sorte, même dans l'hypothèse où le couvercle n'assurerait pas une protection étanche à l'eau, le ruissellement éventuel d'eau de pluie n'atteindrait pas la fiche car celle-ci est alors encore protégée par le réceptacle de fiche.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue en perspective de dessous d'une unité d'alimentation électrique selon un mode de réalisation de la présente invention, le câble de connexion électrique étant en position de recharge, à l'écart de la batterie d'accumulateurs électriques, pour une connexion à une source extérieure de fourniture d'énergie électrique ;
[Fig.2] La figure 2 est une vue en perspective de dessous de l'unité d'alimentation électrique de la figure 1, le câble de connexion électrique étant en position de repos, entièrement plaqué contre la batterie d'accumulateurs électriques, la fiche mâle étant engagée dans le réceptacle de fiche ;
[Fig.3] La figure 3 est une vue en perspective de dessous de l'unité d'alimentation électrique de la figure 1, dans une première position intermédiaire dans laquelle le câble de connexion électrique est partiellement plaqué contre la batterie d'accumulateurs électriques ;
[Fig.4] La figure 4 est une vue en perspective de dessous de l'unité d'alimentation électrique de la figure 1, dans une seconde position intermédiaire dans laquelle le câble de connexion électrique est presque entièrement plaqué contre la batterie d'accumulateurs électriques, la fiche mâle étant partiellement engagée dans le réceptacle de fiche ;
[Fig.5] La figure 5 est une vue partielle de côté en coupe longitudinale illustrant la position d'engagement partiel de la fiche mâle dans le réceptacle de fiche ;
[Fig.6] La figure 6 est une vue partielle de côté en coupe longitudinale illustrant la position d'engagement complet de la fiche mâle dans le réceptacle de fiche ;
[Fig.7] La figure 7 est une vue partielle de côté illustrant la position et l'orientation de la fiche mâle dans le réceptacle de fiche lorsque l'unité d'alimentation est en cours d'introduction dans un cadre de vélo lui-même illustré en coupe longitudinale ;
[Fig.8] La figure 8 est une vue partielle de côté en coupe longitudinale illustrant la position et l'orientation de la fiche mâle dans le réceptacle de fiche lorsque l'unité d'alimentation électrique est logée dans le cadre de vélo ;
[Fig.9] La figure 9 est une vue en perspective de dessus illustrant l'unité d'alimentation électrique en cours d'introduction dans un cadre de vélo lui-même illustré en coupe longitudinale ;
[Fig.10] La figure 10 est une vue en perspective de dessus illustrant l'unité d'alimentation électrique logée dans le cadre de vélo lui-même illustré en coupe longitudinale ;
[Fig.11] La figure 11 est une vue en perspective de dessus illustrant l'unité d'alimentation électrique lors d'une tentative d'insertion dans le cadre de vélo lorsque cette insertion est empêchée par le câble de connexion électrique ; et
[Fig.12] La figure 12 est une vue de côté d'un vélo dans lequel est incorporée l'unité d'alimentation électrique.

### DESCRIPTION DES MODES DE REALISATION PREFERES

Lorsque des références numériques identiques sont utilisées dans plusieurs modes de réalisation de l'invention, ces références numériques désignent des éléments identiques ou similaires dans chacun des modes de réalisation.

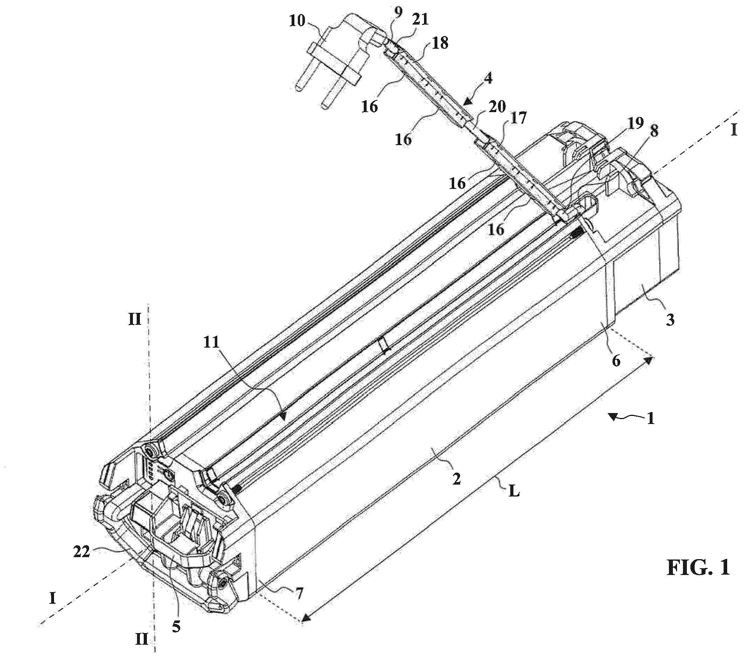

On considère tout d'abord l'unité d'alimentation électrique 1 telle qu'illustrée de façon globale sur les figures 1 à 4. Il s'agit d'une unité d'alimentation électrique amovible, conformée pour être embarquée sur un véhicule, en particulier mais de façon non limitative sur un véhicule léger à assistance électrique tel qu'une bicyclette.

Cette unité d'alimentation électrique 1 comprend une batterie d'accumulateurs électriques 2, un chargeur 3, un câble de connexion électrique 4, et un réceptacle de fiche 5.

La batterie d'accumulateurs électriques 2 est de forme allongée entre une première extrémité 6 et une seconde extrémité 7 selon une direction d'allongement I-I, et présente une longueur L comprise entre 20 et 30 centimètres environ, avantageusement de 25 cm environ.

Le chargeur 3 est fixé à ladite première extrémité 6 de la batterie d'accumulateurs électriques 2, comporte une sortie connectée à ladite batterie d'accumulateurs électriques 2, et comporte une entrée conformée pour sa connexion à une source extérieure d'énergie électrique. Le chargeur 3 est structuré de façon connue pour transformer un courant électrique alternatif, fourni au chargeur 3 par une source extérieure d'énergie électrique, en un courant électrique continu, fourni par le chargeur 3 à la batterie d'accumulateurs électriques 2, et approprié pour la recharge de cette dernière.

Le câble de connexion électrique 4 comporte une première extrémité 8 fixe et connectée de façon permanente à l'entrée du chargeur 3, et comporte une seconde extrémité 9 munie d'une fiche mâle 10 conformée pour la connexion à la source extérieure d'énergie électrique.

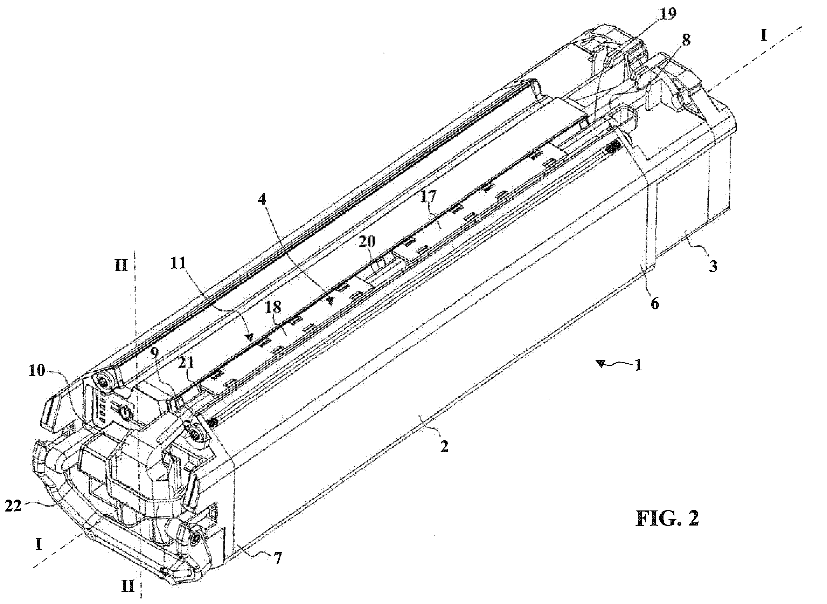

Le réceptacle de fiche 5 est disposé à la seconde extrémité 7 de la batterie d'accumulateurs électriques 2 et est conformé pour recevoir et retenir ladite fiche mâle 10 en une position de repos du câble de connexion électrique 4 comme illustré sur la figure 2.

Comme on le voit plus particulièrement sur la figure 1, une rainure 11 est prévue en périphérie de la batterie 2, et cette rainure 11 est sensiblement rectiligne et parallèle à la direction d'allongement I-I. La rainure 11 est conformée pour pouvoir recevoir et contenir le câble de connexion électrique 4 lorsque celui-ci est en position de repos comme illustré sur la figure 2.

Dans cette position de repos illustré sur la figure 2, le câble de connexion électrique 4 se trouve ainsi dans une position dans laquelle il longe la batterie d'accumulateurs électriques 2 en un seul passage, et la fiche mâle 10 est logée dans le réceptacle de fiche 5.

Comme on le voit notamment sur les figures 1 à 6, le réceptacle de fiche 5 est conformé pour recevoir ladite fiche mâle 10 selon une direction d'insertion II-II transversale par rapport à ladite direction d'allongement I-I. Pour faciliter l'insertion, la fiche mâle est coudée, de préférence à 90°.

La longueur du câble de connexion électrique 4 est choisie de façon que, en position de repos, le câble de connexion électrique 4 soit tendu entre le chargeur 3 et le réceptacle de fiche 5. En pratique, le câble de connexion électrique 4 présente une longueur égale à la longueur de la batterie d'accumulateurs 2, c'est-à-dire une longueur comprise entre 20 et 30 cm environ, avantageusement de 25 cm environ.

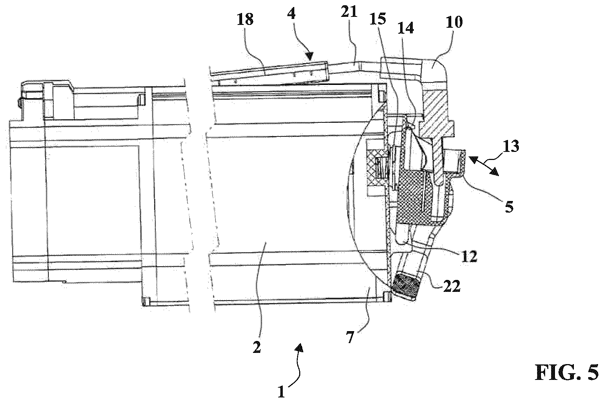

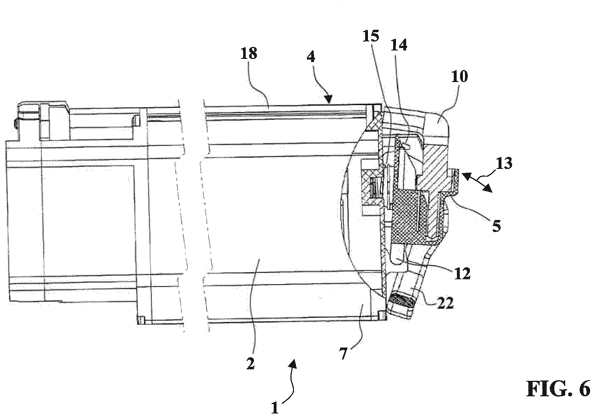

On considère maintenant les figures 5 et 6, illustrant en vue de côté la structure du réceptacle de fiche 5 en coupe longitudinale. Sur la figure 5, la fiche mâle 10 est en cours d'introduction dans le réceptacle de fiche 5, tandis que sur la figure 6, la fiche mâle 10 est totalement introduite dans le réceptacle de fiche 5.

Le réceptacle de fiche 5 est une pièce mobile qui peut être déplacée selon la direction d'allongement I-I, entre une position rapprochée et une position écartée vis-à-vis de la batterie d'accumulateurs 2. En pratique, le réceptacle de fiche 5 est une pièce mobile, montée rotative autour d'un axe transversal 12 de la seconde extrémité 7 de la batterie d'accumulateurs 2. Le mouvement de rotation du réceptacle de fiche 5 est illustré par la flèche 13, et est limité à l'écart de la batterie d'accumulateurs 2 par une butée 14 en forme de crochet. Un ressort 15 repousse en permanence le réceptacle de fiche 5 à l'écart de la batterie d'accumulateurs 2 et en direction de la butée 14.

De la sorte, lorsque l'utilisateur présente la fiche mâle 10 pour l'introduire dans le réceptacle de fiche 5, comme illustré sur la figure 5, le réceptacle de fiche 5 bascule légèrement en direction de la batterie d'accumulateurs 2 à l'encontre de la poussée du ressort 15 pour faciliter l'introduction de la fiche mâle 10 alors que le câble de connexion électrique 4 n'est pas totalement tendu. Ensuite, lorsque la fiche mâle 10 est totalement introduite dans le réceptacle de fiche 5, l'utilisateur relâche le câble de connexion électrique 4, et le ressort 15 repousse alors le réceptacle de fiche 5 vers la butée 14 en assurant ainsi une tension satisfaisante du câble de connexion électrique 4 en position de repos.

On considère à nouveau les figures 1 à 4, illustrant une structure particulière du câble de connexion électrique 4. Dans ce mode de réalisation, des moyens de liaison point à point sont répartis selon la longueur du câble de connexion électrique 4 et permettent de maintenir le câble de connexion électrique 4 contre la batterie d'accumulateurs 2 lorsqu'il est en position de repos. En pratique, le câble de connexion électrique 4 comprend des aimants 16 qui, en position de repos, viennent se plaquer dans le fond métallique de la rainure 11 de la batterie d'accumulateurs 2.

Dans ce mode de réalisation, on prévoit en outre que le câble de connexion électrique 4 est muni de deux réglettes de rigidification 17 et 18, définissant deux tronçons à rigidité augmentée séparant des tronçons de câble 19, 20 et 21 dépourvus de réglette et ayant une rigidité plus réduite que celle des réglettes 17 et 18. Les aimants 16 sont placés sur les réglettes de rigidification 17 et 18.

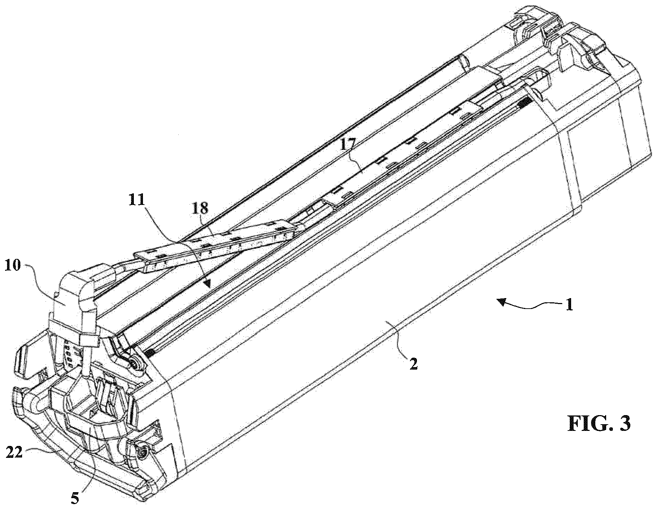

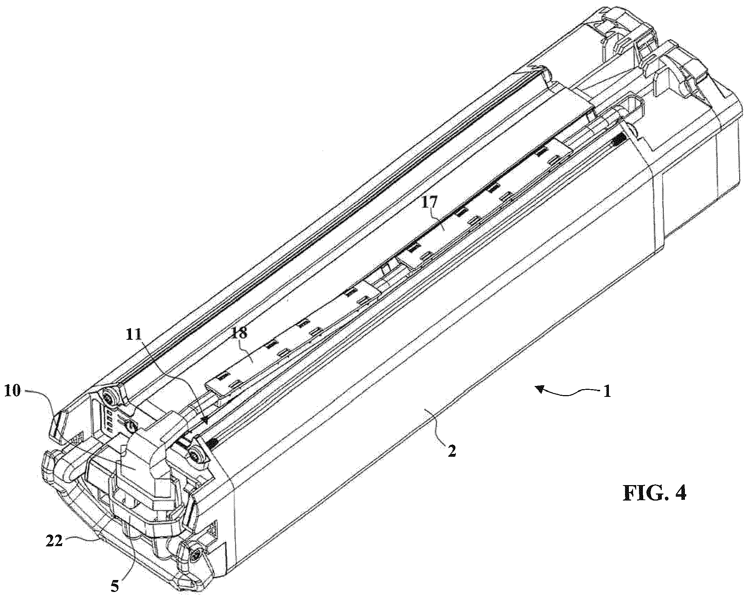

Grâce à cette structure du câble de connexion électrique 4, lorsque l'utilisateur veut amener le câble de connexion électrique 4 vers la position de repos illustrée sur la figure 2, à partir de la position de recharge illustrée sur la figure 1, il rapproche progressivement le câble de connexion électrique 4 vers la rainure 11 de la batterie d'accumulateurs 2. Du fait de l'attraction des aimants 16, la réglette 17 vient en premier se plaquer dans la rainure 11 comme illustré sur la figure 3, facilitant l'engagement du câble de connexion électrique 4 dans la rainure 11. Ensuite, comme illustré sur la figure 4, lors de la présentation de la fiche mâle 10 à l'entrée du réceptacle de fiche 5, la réglette 18 tend à se plaquer dans la rainure 11. Enfin, en position de repos illustrée sur la figure 1, les deux réglettes 17 et 18 sont plaquées dans la rainure 11.

Comme on le voit sur les figures 1 à 4 notamment, l'unité d'alimentation électrique 1 comprend, à ses deux extrémités, des organes de fixation permettant sa fixation amovible dans un logement de cadre de bicyclette. Ces organes de fixation peuvent être structurés de façon connue, ne font pas partie en eux-mêmes de la présente invention. Une poignée de transport 22, escamotable par rotation, est prévue à la seconde extrémité de l'unité d'alimentation électrique 1, permettant sa préhension et son transport. À sa seconde extrémité, l'unité d'alimentation électrique 1 comporte en outre des moyens de connexion électrique pour connecter la batterie d'accumulateurs électriques 2 au moteur d'assistance électrique de la bicyclette lorsqu'elle est fixée dans le logement de cadre de bicyclette.

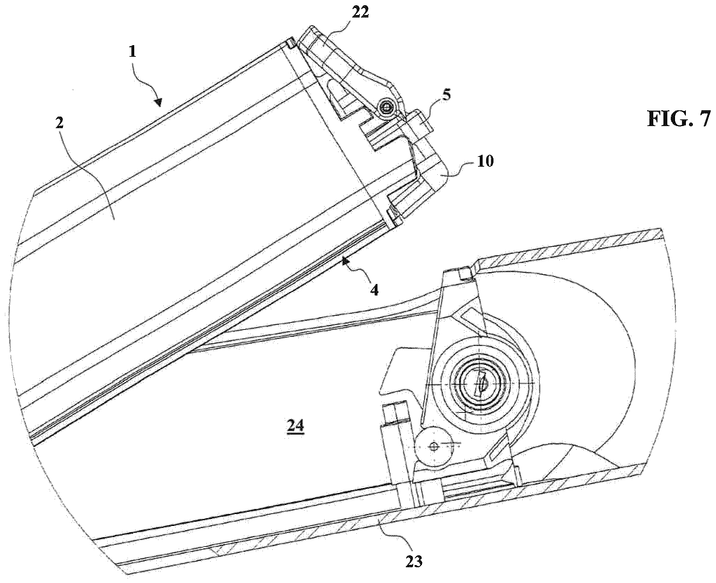

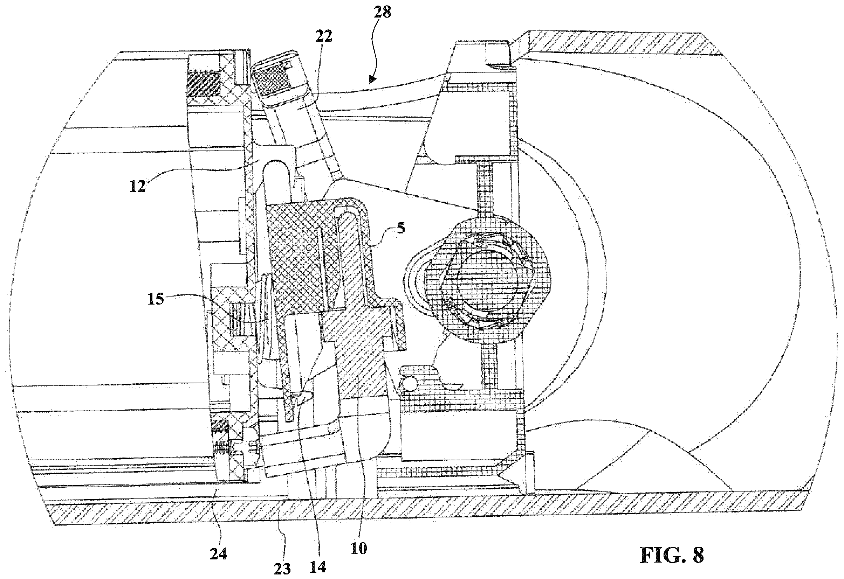

On considère maintenant les figures 7 à 12, illustrant le positionnement de l'unité d'alimentation électrique 1 telle que décrite précédemment dans un cadre de vélo 23 prévu à cet effet.

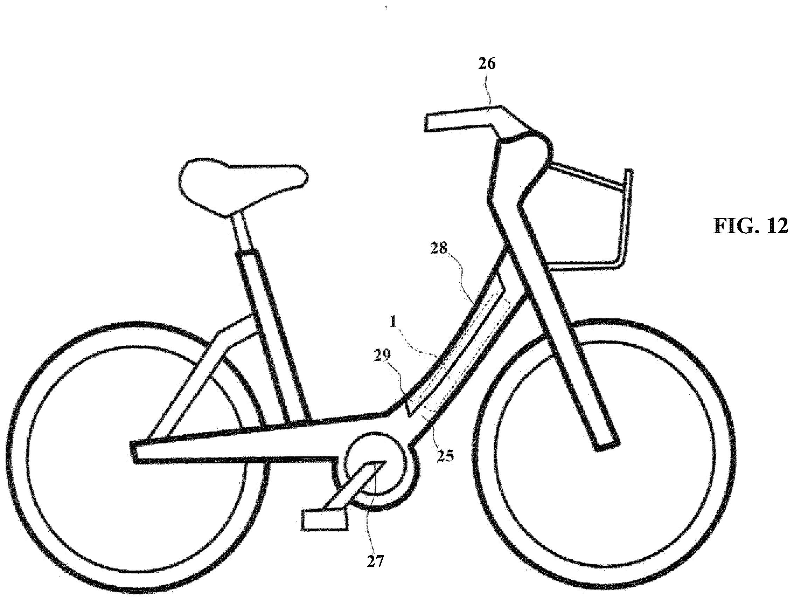

Le cadre de vélo 23 comprend un compartiment de réception 24 dans lequel l'unité d'alimentation électrique 1 peut s'engager à faible jeu. En pratique, le compartiment de réception 24 est ménagé dans une poutre oblique 25 du cadre de vélo entre le guidon 26 et le pédalier 27 (figure 12). Le compartiment de réception 24 comprend une ouverture supérieure 28 obturable par un couvercle 29 et autorisant l'insertion et l'extraction de l'unité d'alimentation électrique 1. Dans le compartiment de réception 24, l'unité d'alimentation électrique 1 est disposée avec sa direction d'allongement I-I sensiblement alignée avec la poutre oblique 25, le réceptacle de fiche 5 est disposé en partie haute du compartiment de réception 24, et le câble de connexion électrique 4 en position de repos est situé en dessous de la batterie d'accumulateurs électriques 2, face au fond du compartiment de réception 24.

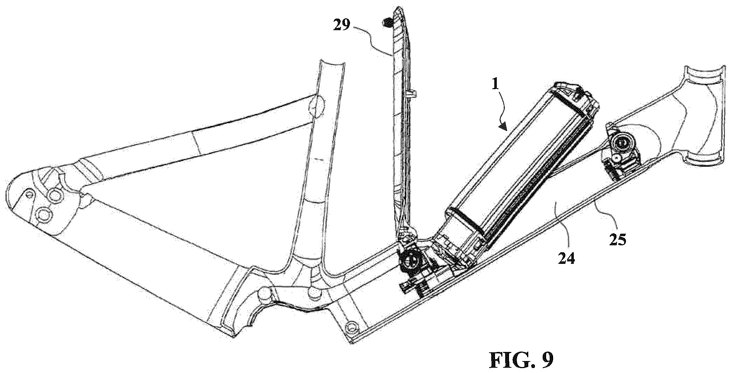

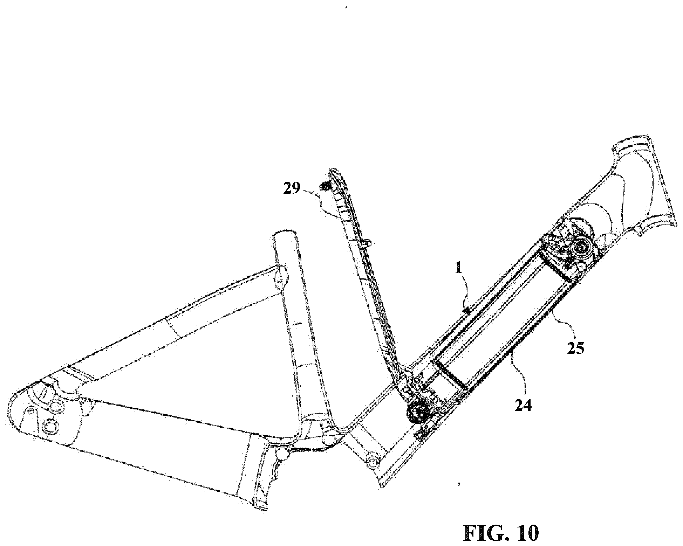

La figure 9 illustre l'unité d'alimentation électrique 1 en cours d'introduction dans le compartiment de réception 24, sa première extrémité étant engagée dans le compartiment de réception 24 et sa seconde extrémité étant encore à l'extérieur du compartiment de réception 24. La figure10 illustre l'unité d'alimentation électrique 1 entièrement introduite dans le compartiment de réception 24, avant fermeture du couvercle 29.

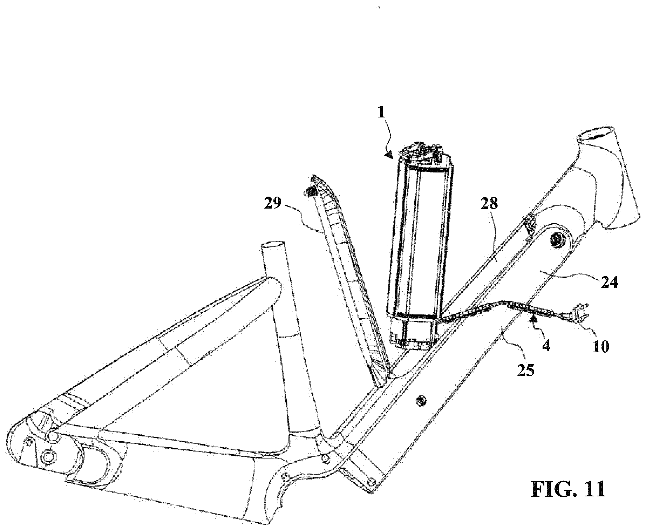

En considérant la figure 11, on distingue l'ouverture 28 du compartiment de réception 24. Les dimensions de l'ouverture 28 sont choisies de façon que l'unité d'alimentation électrique 1 traverse cette ouverture 28 avec seulement un faible jeu lors de son introduction. De la sorte, lorsque le câble de connexion électrique 4 n'est pas correctement engagé dans sa position de repos, par exemple comme illustré sur la figure 11, le câble de connexion électrique 4 lui-même empêche l'introduction correcte de l'unité d'alimentation électrique 1, qui ne peut ainsi pas être utilisée pour alimenter le moteur d'assistance du vélo électrique.

Le mode de réalisation qui a été précédemment décrit, tant pour l'unité d'alimentation électrique 1 que pour le véhicule de type vélo, la batterie d'accumulateurs électriques 2 est de forme relativement allongée, particulièrement bien adaptée pour un vélo dans laquelle le cadre comprend une poutre oblique 25.

Toutefois, la présente invention peut trouver application dans des véhicules n'ayant pas de tube central tel que la poutre oblique 25. Tel est le cas par exemple des trottinettes. Dans ce cas, la batterie d'accumulateurs électriques peut alors avoir une forme moins allongée, de sorte qu'un câble longeant la batterie d'accumulateurs électriques en un seul passage risque d'être trop court pour une connexion à une source extérieure d'énergie électrique. On peut alors prévoir que, en position de repos, le câble de connexion électrique longe une face de la batterie d'accumulateurs en faisant un aller et un retour, le réceptacle de fiche étant alors positionné sur le chargeur. On profite alors de la flexibilité entre deux segments rigides du câble de connexion électrique.

En alternative ou en complément, on peut également prévoir que, en position de repos, le câble de connexion électrique est rangé rabattu sur deux faces de la batterie d'accumulateurs électriques.

La présente invention n'est pas limitée aux modes de réalisation qui ont été explicitement décrits, mais elle en inclut les diverses variantes et généralisations contenues dans le domaine des revendications ci-après.

## Revendications

1. Unité d'alimentation électrique (1) embarquée pour véhicule, comprenant :
- une batterie d'accumulateurs électriques (2) ayant une longueur entre une première extrémité (6) et une seconde extrémité (7) selon une direction d'allongement (I-I),
- un chargeur (3), fixé à ladite première extrémité (6) de la batterie d'accumulateurs électriques (2), ayant une sortie connectée à ladite batterie d'accumulateurs électriques (2), et ayant une entrée conformée pour sa connexion à une source extérieure d'énergie électrique,
dans laquelle :
- l'entrée comprend un câble de connexion électrique (4), dont une première extrémité (8) est fixe et connectée de façon permanente au chargeur (3), et dont une seconde extrémité (9) est libre et munie d'une fiche mâle (10) conformée pour son engagement et sa connexion à un socle de raccordement de ladite source extérieure d'énergie électrique,
- un réceptacle de fiche (5) est conformé pour recevoir et retenir ladite fiche mâle (10) en une position de repos du câble de connexion électrique (4),
où:
- le réceptacle de fiche (5) est prévu à une extrémité (7) de l'unité d'alimentation électrique (1), **caractérisée en ce que**:
- dans ladite position de repos, le câble de connexion électrique (4) longe ladite batterie d'accumulateurs électriques (2),
- le réceptacle de fiche (5) est mobile, selon la direction d'allongement (I-I), entre une position rapprochée et une position écartée, le réceptacle de fiche (5) étant sollicité en permanence par un moyen de rappel (15) qui le repousse vers sa position écartée de façon à tendre le câble de connexion électrique (4) en position de repos.

2. Unité d'alimentation électrique (1) selon la revendication 1,
**caractérisée en ce que** le réceptacle de fiche (5) est conformé pour recevoir ladite fiche mâle (10) selon une direction d'insertion (II-II) transversale par rapport à ladite direction d'allongement (I-I).

3. Unité d'alimentation électrique (1) selon la revendication 2, **caractérisée en ce que** ladite fiche mâle (10) est coudée.

4. Unité d'alimentation électrique selon l'une quelconque des revendications 1 à 3, **caractérisée en ce que**, entre le chargeur (3) et le réceptacle de fiche (5), le câble de connexion électrique (4) est maintenu contre la batterie d'accumulateurs électriques (2) par une pluralité de moyens de liaison point à point (16) répartis selon la longueur du câble de connexion électrique (4).

5. Unité d'alimentation électrique selon la revendication 4,
**caractérisée en ce que** les moyens de liaison point à point comprennent des aimants (16).

6. Unité d'alimentation électrique selon l'une quelconque des revendications 1 à 5, **caractérisée en ce que**, entre le chargeur (3) et la fiche mâle (10), le câble de connexion électrique (4) est muni de réglettes de rigidification (17, 18) définissant au moins deux tronçons de câble à rigidité augmentée séparant des tronçons de câble dépourvus de réglette (19, 20, 21) et ayant une rigidité plus réduite que celle des réglettes.

7. Unité d'alimentation électrique selon l'une quelconque des revendications 1 à 6, **caractérisée en ce que** :
- le réceptacle de fiche (5) est disposé à la seconde extrémité (7) de la batterie d'accumulateurs électriques (2),
- en position de repos, le câble de connexion électrique (4) longe ladite batterie d'accumulateurs électriques (2) en un seul passage.

8. Unité d'alimentation électrique selon l'une quelconque des revendications 1 à 7, **caractérisée en ce que**, entre le chargeur (3) et le réceptacle de fiche (5), le câble de connexion électrique (4) est logé dans une rainure (11) prévue en périphérie de la batterie d'accumulateurs électriques (2).

9. Unité d'alimentation électrique selon la revendication 8,
**caractérisée en ce que** ladite rainure (11) est sensiblement rectiligne et parallèle à ladite direction d'allongement (I-I).

10. Unité d'alimentation électrique selon l'une quelconque des revendications 1 à 9, **caractérisée en ce qu'**elle comprend des organes de fixation amovible conformés pour sa fixation dans un logement d'un cadre de bicyclette.

11. Unité d'alimentation électrique selon l'une quelconque des revendications 1 à 10, **caractérisée en ce que** le câble de connexion électrique (4) a une longueur comprise entre 20 et 30 centimètres environ, avantageusement de 25 centimètres environ.

12. Vélo à assistance électrique comprenant une unité d'alimentation électrique (1) selon l'une quelconque des revendications 1 à 11.

13. Vélo à assistance électrique selon la revendication 12,
**caractérisé en ce qu'**il comprend un compartiment de réception (24) dans lequel l'unité d'alimentation électrique (1) peut s'engager à faible jeu, interdisant l'engagement correct de l'unité d'alimentation électrique (1) dans le compartiment de réception (24) lorsque le câble de connexion électrique (4) n'est pas positionné dans sa position de repos.

14. Vélo à assistance électrique selon la revendication 13,
**caractérisé en ce que** :
- le compartiment de réception (24) est ménagé dans une poutre oblique (25) du cadre de vélo entre le guidon (26) et le pédalier (27),
- le compartiment de réception (24) comprend une ouverture supérieure (28) obturable par un couvercle (29) et autorisant l'insertion et l'extraction de l'unité d'alimentation électrique (1),
- dans le compartiment de réception (24), l'unité d'alimentation électrique (1) est disposée avec sa direction d'allongement (I-I) sensiblement alignée avec la poutre oblique (25), avec le réceptacle de fiche (5) en partie haute du compartiment de réception (24), et avec le câble de connexion électrique (4) en position de repos situé en dessous de la batterie d'accumulateurs électriques (2).

## Patentansprüche

1. Bordeigene elektrische Stromversorgungseinheit (1) für ein Fahrzeug, umfassend:
- eine elektrische Speicherbatterie (2) mit einer Länge zwischen einem ersten Ende (6) und einem zweiten Ende (7) entlang einer Längsrichtung (I-I),
- einen Lader (3), der an besagtem ersten Ende (6) der elektrischen Speicherbatterie (2) fixiert ist und einen Ausgang hat, der mit besagter elektrischen Speicherbatterie (2) verbunden ist, und der einen Eingang hat, der für seine Verbindung an eine externe elektrische Energiequelle angepasst ist,
wobei:
- der Eingang ein elektrisches Verbindungskabel (4) umfasst, dessen erstes Ende (8) dauerhaft mit dem Lader (3) verbunden und fixiert ist und dessen zweites Ende (9) frei und mit einem Stecker (10) versehen ist, der für seinen Eingriff und seine Verbindung mit einem Anschlusssockel besagter externer elektrischer Energiequelle angepasst ist,
- eine Steckeraufnahme (5) so angepasst ist, dass sie besagten Stecker (10) in einer Ruheposition des elektrischen Verbindungskabels (4) aufnimmt und festhält,
- die Steckeraufnahme (5) an einem Ende (7) der elektrischen Stromversorgungseinheit (1) vorgesehen ist, **dadurch gekennzeichnet, dass:**
- in besagter Ruheposition das elektrische Verbindungskabel (4) entlang besagter elektrischer Speicherbatterie (2) verläuft,
- die Steckeraufnahme (5) in Längsrichtung (I-I) zwischen einer angenäherten Position und einer beabstandeten Position bewegbar ist, wobei die Steckeraufnahme (5) permanent durch ein Rückstellmittel (15) vorgespannt ist, das sie in Richtung ihrer beabstandeten Position drückt, um das elektrische Verbindungskabel (4) in der Ruheposition zu strecken.

2. Elektrische Stromversorgungseinheit (1) nach Anspruch 1, **dadurch gekennzeichnet, dass** die Steckeraufnahme (5) so angepasst ist, dass sie besagten Stecker (10) entlang einer Einsteckrichtung (II-II) quer zu besagter Längsrichtung (I-I) aufnehmen kann.

3. Elektrische Stromversorgungseinheit (1) nach Anspruch 2, **dadurch gekennzeichnet, dass** besagter Stecker (10) abgewinkelt ist.

4. Elektrische Stromversorgungseinheit nach einem der Ansprüche 1 bis 3, **dadurch gekennzeichnet, dass** das elektrische Verbindungskabel (4) zwischen dem Lader (3) und der Steckeraufnahme (5) durch mehrere über die Länge des elektrischen Verbindungskabels (4) verteilte Punkt-zu-Punkt-Verbindungsmittel (16) an der elektrischen Speicherbatterie (2) gehalten ist.

5. Elektrische Stromversorgungseinheit nach Anspruch 4, **dadurch gekennzeichnet, dass** die Punkt-zu-Punkt-Verbindungsmittel (16) Magnete umfassen.

6. Elektrische Stromversorgungseinheit nach einem der Ansprüche 1 bis 5, **dadurch gekennzeichnet, dass** das elektrische Verbindungskabel (4) zwischen dem Lader (3) und dem Stecker (10) mit Versteifungsstreifen (17, 18) versehen ist, die mindestens zwei Kabelabschnitte mit erhöhter Steifigkeit definieren, die Kabelabschnitte ohne Streifen (19, 20, 21) trennen und eine geringere Steifigkeit als die Streifen aufweisen.

7. Elektrische Stromversorgungseinheit nach einem der Ansprüche 1'bis 6, **dadurch gekennzeichnet, dass**:
- die Steckeraufnahme (5) am zweiten Ende (7) der elektrischen Speicherbatterie (2) angeordnet ist,
- das elektrische Verbindungskabel (4) in der Ruheposition in einem Durchgang entlang besagter elektrischer Speicherbatterie (2) verläuft.

8. Elektrische Stromversorgungseinheit nach einem der Ansprüche 1 bis 7, **dadurch gekennzeichnet, dass** das elektrische Verbindungskabel (4) zwischen dem Lader (3) und der Steckeraufnahme (5) in einer am Umfang der elektrischen Speicherbatterie (2) vorgesehenen Nut (11) untergebracht ist.

9. Elektrische Stromversorgungseinheit nach Anspruch 8, **dadurch gekennzeichnet, dass** besagte Nut (11) im Wesentlichen geradlinig und parallel besagter Längsrichtung (I-I) verläuft.

10. Elektrische Stromversorgungseinheit nach einem der Ansprüche 1 bis 9, **dadurch gekennzeichnet, dass** sie abnehmbare Befestigungselemente umfasst, die für die Befestigung in einem Gehäuse eines Fahrradrahmens angepasst sind.

11. Elektrische Stromversorgungseinheit nach einem der Ansprüche 1 bis 10, **dadurch gekennzeichnet, dass** das elektrische Verbindungskabel (4) eine Länge zwischen etwa 20 und 30 Zentimetern, vorteilhafterweise etwa 25 Zentimeter, umfasst.

12. Elektrisch unterstütztes Fahrrad, umfassend eine elektrische Stromversorgungseinheit (1) gemäß einem der Ansprüche 1 bis 11.

13. Elektrisch unterstütztes Fahrrad nach Anspruch 12, **dadurch gekennzeichnet, dass** es ein Aufnahmefach (24) aufweist, in das die elektrische Stromversorgungseinheit (1) mit geringem Spiel einrasten kann, wobei das korrekte Einrasten der elektrischen Stromversorgungseinheit (1) in das Aufnahmefach (24) verhindert wird, wenn das elektrische Verbindungskabel (4) nicht in seiner Ruheposition positioniert ist.

14. Elektrisch unterstütztes Fahrrad nach Anspruch 13, **dadurch gekennzeichnet, dass**:
- das Aufnahmefach (24) in einem Schrägträger (25) des Fahrradrahmens zwischen Lenker (26) und Tretkurbel (27) angeordnet ist,
- das Aufnahmefach (24) eine obere Öffnung (28) umfasst, die durch einen Deckel (29) verschließbar ist und das Einsetzen und Entnehmen der elektrischen Stromversorgungseinheit (1) ermöglicht,
- im Aufnahmefach (24) die elektrische Energieversorgungseinheit (1) mit ihrer Längsrichtung (I-I) im Wesentlichen fluchtend mit dem Schrägträger (25) angeordnet ist, wobei sich die Steckeraufnahme (5) im oberen Teil des Aufnahmefachs (24) befindet und sich das elektrische Verbindungskabel (4) in Ruheposition unterhalb der elektrischen Speicherbatterie (2) befindet.

## Claims

1. On-board power supply unit (1) for a vehicle, comprising:
- a battery of electric accumulators (2) having a length between a first end (6) and a second end (7) in a direction of elongation (I-I),
- a charger (3), which is fixed to said first end (6) of the battery of electric accumulators (2), having an output connected to said battery of electric accumulators (2), and having an input designed to connect to an external source of electrical energy,
in which:
- the input comprises an electrical connection cable (4), a first end (8) of which is fixed and permanently connected to the charger (3), and a second end (9) of which is free and provided with a male plug (10) designed to fit with and connect to a connection socket of said external source of electrical energy,
- a plug receptacle (5) is designed to receive and retain said male plug (10) when the electrical connection cable (4) is in a rest position,
wherein:
- the plug receptacle (5) is provided at one end (7) of the power supply unit (1), **characterized in that**:
- in said rest position, the electrical connection cable (4) runs along said battery of electric accumulators (2),
- the plug receptacle (5) can be moved, in the direction of elongation (I-I), between a near position and a remote position, the plug receptacle (5) being permanently biased by a return means (15) that pushes it towards its remote position so as to tension the electrical connection cable (4) into the rest position.

2. Power supply unit (1) according to Claim 1, **characterized in that** the plug receptacle (5) is designed to receive said male plug (10) in an insertion direction (II-II) that is transverse with respect to said direction of elongation (I-I).

3. Power supply unit (1) according to Claim 2, **characterized in that** said male plug (10) is angled.

4. Power supply unit according to any one of Claims 1 to 3, **characterized in that**, between the charger (3) and the plug receptacle (5), the electrical connection cable (4) is held against the battery of electric accumulators (2) by a plurality of point-to-point connecting means (16) distributed along the length of the electrical connection cable (4).

5. Power supply unit according to Claim 4, **characterized in that** the point-to-point connecting means comprise magnets (16).

6. Power supply unit according to any one of Claims 1 to 5, **characterized in that**, between the charger (3) and the male plug (10), the electrical connection cable (4) is provided with stiffening strips (17, 18) defining at least two cable portions of increased stiffness separating strip-free cable portions (19, 20, 21) having a lower stiffness than that of the strips.

7. Power supply unit according to any one of Claims 1 to 6, **characterized in that**:
- the plug receptacle (5) is arranged at the second end (7) of the battery of electric accumulators (2),
- in the rest position, the electrical connection cable (4) runs along said battery of electric accumulators (2) in a single pass.

8. Power supply unit according to any one of Claims 1 to 7, **characterized in that**, between the charger (3) and the plug receptacle (5), the electrical connection cable (4) is housed in a groove (11) provided on the periphery of the battery of electric accumulators (2).

9. Power supply unit according to Claim 8, **characterized in that** said groove (11) is substantially rectilinear and parallel to said direction of elongation (I-I).

10. Power supply unit according to any one of Claims 1 to 9, **characterized in that** it comprises removable fixing members designed to fix it within a housing of a bicycle frame.

11. Power supply unit according to any one of Claims 1 to 10, **characterized in that** the electrical connection cable (4) has a length of between approximately 20 and 30 centimetres, advantageously approximately 25 centimetres.

12. Electrically assisted bicycle comprising a power supply unit (1) according to any one of Claims 1 to 11.

13. Electrically assisted bicycle according to Claim 12, **characterized in that** it comprises a receiving compartment (24) into which the power supply unit (1) can fit with a small amount of clearance, preventing the power supply unit (1) from correctly fitting into the receiving compartment (24) when the electrical connection cable (4) is not positioned in its rest position.

14. Electrically assisted bicycle according to Claim 13, **characterized in that**:
- the receiving compartment (24) is formed in a down tube (25) of the bicycle frame between the handlebars (26) and the chainset (27),
- the receiving compartment (24) comprises an upper opening (28) that can be closed by a cover (29) and allows the power supply unit (1) to be inserted and removed,
- in the receiving compartment (24), the power supply unit (1) is arranged with its direction of elongation (I-I) substantially aligned with the down tube (25), with the plug receptacle (5) in the upper part of the receiving compartment (24), and with the electrical connection cable (4) in the rest position situated below the battery of electric accumulators (2).
